# EUROPEAN PATENT SPECIFICATION

(11) **EP 3 776 167 B1**
(45) Date of publication and mention of the grant of the patent: **25.03.2026**
(21) Application number: 19703256.8
(22) Date of filing: 24.01.2019
(51) Int. Cl.: G06F 3/12

(54) **APPARATUS AND METHOD FOR PRINTING AND CONTROLLING EMBEDDING CASSETTES**
VORRICHTUNG UND VERFAHREN ZUM DRUCKEN UND STEUERN VON EINBETTKASSETTEN
APPAREIL ET PROCÉDÉ POUR IMPRIMER ET COMMANDER DES CASSETTES D'INCORPORATION

(30) Priority: 29.03.2018 EP 18164857
(43) Date of publication of application: 17.02.2021
(73) Proprietor: FA-TECH DIAGNOSTICS ITALIA S.R.L., 63074, San Benedetto del Tronto (AP) (IT)
(72) Inventor: BERTOLINI, Andrea, Mario, SWIEQI, SWQ3029 (MT); HARCHI, Abdelkrim, 63075 Acquaviva Picena (AP) (IT)
(74) Representative: Serravalle, Marco
(86) International application number: PCT/EP2019/051784
(87) International publication number: WO 2019/185213

(56) References cited:
- EP-A2- 1 587 019
- US-A1- 2012 269 564

## Description

### Technical field of the invention

**.** The present invention is directed to an apparatus and a method for printing and controlling embedding cassettes. More particularly, the present invention is directed to an apparatus which allows printing of embedding cassettes and, after printing, it verifies that the information printed on the cassettes are readable and correspond to the data contained in the printing file.

**.** Furthermore, the present invention is directed to a method for operating the above defined apparatus, which method allows printing the cassettes and verifying the readability and the correctness of the printed values.

### Background of the invention

**.** Embedding cassettes are disposables very widely used in anatomical pathology labs and hospitals. Their shape is a polyhedron having rectangular base, whose section along the major axis is a right-angled trapezium, while the section along the minor axis is a rectangle. The upper base is a rectangle having its shorter side equal to the shorter side of the lower base, and its longer side shorter than the longer side of the lower base. On the slanted face of the polyhedron, information about the patient and the biological content of the cassette are usually printed.

**.** In the last few years, laser printing is taking the place of ink printing, since the former has higher definition and durability when compared to the latter.

**.** WO 2012/159762 discloses an embedding cassette laser printer which allows printing of three faces of the cassette thanks to gripping means which, in the presence of motors, rotate the cassette in such a way that three faces in succession are presented in front of the printing head.

**.** EP 1 587 019 discloses an RFID labeling system configured to verify and synchronize optical and RFID data encoding in automated packaging lines. The system reads a barcode label on a product, validates its readability and data consistency with a host data stream, and programs an RFID tag accordingly. A dedicated RFID encoder/verifier unit ensures the correct EPC data is written to the tag, with error handling and retry mechanisms in case of discrepancies.

**.** Another parameter used to distinguish cassettes is the colour. Commonly, different colours are associated to different types of biological samples, or to the running year, while the patient identification code is read by the scanner.

**.** By way of example, when the pathology lab receives a biological sample from surgery, a local ID is generated by the LIS (Laboratory Information System) and assigned to the patient. This ID number will help tracing the biological sample through the different procedures of the pathology lab. After registration of the patient, the sample is sent to the grossing room, where the pathologist, with the help of specialised technicians, examines the sample, looking for "anomalous" tissue. Part of the anomalous tissue is cut in small pieces and inserted in a special container (embedding cassette) previously marked by a dedicated printer. If the information printed on the cassette is not readable by a scanner, it will be necessary for the operator to insert all data manually. This happening produces a considerable loss of time and a possible source of error in the tracing of samples. After the cassette has been used, it is compulsory to archive it in storage systems. It is well known the use of storage systems which comprise identification means to store all information printed on the cassette and provide the user with the information relating to the position of each cassette in the storage system. However, it is a well-known problem that a certain amount of printed cassettes does not reach the storage facility. This fact can only mean that either a certain amount of cassettes is not used, or an amount of used cassettes is not properly stored.

**.** Therefore, it is important to provide a printing device which sharply reduces errors and allows an easy handling downstream of the embedding cassette printer, and a system comprising the above printer and a storage facility, which system allows an easy tracing of cassettes from printing till storage

### Summary of the invention

**.** The present invention represents a solution of the above defined problem, since it is directed to a system comprising a printer for embedding cassettes comprising: at least one hub for feeding at least one printing position; conveyor means to transport the cassettes from the hub to the at least one printing position; at least one printing head (110); at least one means (120) to verify the correctness and the readability of the print job, wherein the means (120) to verify the correctness and the readability of the print job is selected from a camera or a barcode scanner, is integrated in the laser and verifies the correctness and the readability of the print job directly through the lens of the laser; and release means (140) to discard the cassette if the print job is not correct or readable, or to convoy it to make it available to an operator; and a storage facility, wherein the storage facility comprises verification means which reads the information printed on the cassette and saves it in a database, wherein the system is capable of comparing the content of the database with the data of the printer and, if a cassette which was printed is not stored within a predetermined period of time, alerts the user of the missing cassettes.

**.** The invention is also directed to a method for tracing embedding cassettes, which method comprises the following steps: subject a cassette to a print job on at least one face, preferably the slanted face; subject the print job to a readability control by using a verification mean; in case the print job is readable and correct, release the cassette; in case the print job is not readable, discard the cassette and proceed with printing a new cassette with identical information; save the information printed on the cassettes in a database; after the cassettes have been used, save the cassettes in a storage facility provided with a verification mean which reads the information and saves it in a database, wherein the system is capable of comparing the content of the two databases and, if a cassette which was printed is not stored within a predetermined period of time, alert the user of the missing cassettes.

### Brief description of the figures

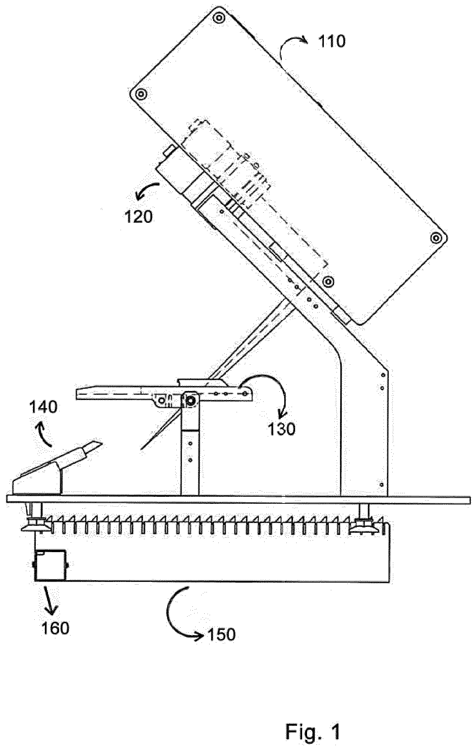

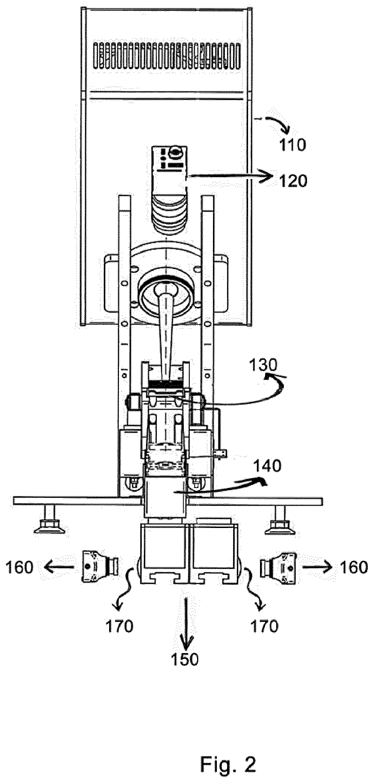

**.** Fig. 1 is a schematic side view of a printer according to a preferred embodiment of the invention.
**.** Fig. 2 is a schematic front view of the printer of Fig.1.

### Detailed description of the invention

**.** The printer depicted in Fig. 1 and 2 comprises a laser printer head 110, a camera or bar code reader 120 (with dotted lines it is indicated an integrated camera/barcode scanner), a cassette support 130 which allows a precise positioning of the cassette in the printing position. The support 130, once the printing job is ended and the correctness of the print job is verified, tilts and let the cassette drop into the guide 140, which in turn drops it in one of the positions of the collector 150. Fig. 2, clearly shows two RFID reader/writer160, laterally placed with respect to the collectors, and a TAG 170 present on each collector.

**.** Preferably, the laser printer used in the present invention is capable of printing on at least one face of the embedding cassette, more preferably the laser printer is capable of printing two or three faces of the embedding cassette.

**.** In case the cassette is printed on two or three faces, the printer according to the invention is prepared to verify all printed faces of the cassette.

**.** It is possible to integrate the camera or the barcode reader in the head of the laser. In this case, the image can be taken directly through the lens of the laser.

**.** As previously stated, it is also possible to use a simple barcode scanner. However, in this case, the amount of information readable is limited to those included in the barcode. By using a camera, it is possible to verify a larger amount of data. In a preferred embodiment, the printer of the invention comprises a camera, more preferably a colour camera.

**.** In fact, a colour camera allows to register also the colour of the cassette. As previously stated, the colour of the cassette is often used as a visual feature to indicate the type of biological sample contained in the cassette, or the running year. Thus, the use of a colour camera allows to retain also this piece of information.

**.** The printer according to the invention also comprises at least one hub which contains the cassettes to be printed, conveyor means to transport the cassettes from the hub to the printing position. Preferably, the printer according to the invention comprises a plurality of hubs, and for example, each hub contains cassettes of different colour.

**.** The conveyor means to transport the cassettes from the hub to the printing position preferably comprise a pusher slide slidable on a plate. In another embodiment the cassette can reach the printing position by fall, by means of a robotic arm, by extraction using a stop gate or by a dispensing mechanism as disclosed in GB 2308841.

**.** Once the cassette has reached the printing position, the information is printed, preferably by means of a laser head. The cassette can be printed on one face only, or on several faces. In case several faces of the cassette are printed, it is possible to make use of the device disclosed in WO 2012/1597622, wherein the cassette is moved thanks to gripping means that hold the cassette and movement organs that rotate the cassette on two different rotation axes, allowing in this way the cassette to present sequentially three different faces orthogonally with respect to the axis of the laser beam.

**.** Once the print job has been completed, the cassette undergoes the validation step by a camera or a barcode scanner and, if the validation has a positive outcome, the cassette is released and made available to an operator. If the outcome is negative, the cassette is discarded through a dedicated chute and the printer prints the identical information which had to be printed on the discarded cassette on a new cassette.

**.** If the cassette is printed on more than one face, the validation step is performed on each printed face, preferably immediately after the face is printed. Thus, after the first face is printed, the print job is verified and if it is correct, the printer starts printing the second face, and so on. In this way, it is avoided that, in the presence of an error, other faces of the cassette are printed.

**.** If the validation is positive, the cassette is released and made available in various ways. In one embodiment of the invention, the cassette is released by falling on a sliding tray which transports the cassette to the operator. If the printer is shared between two or more operators, it is possible for the printer to choose, based on the information received, the operator to whom the cassette is delivered, thanks to the presence of two or more sliding trays, each connected to a different operator.

**.** Finally, it is possible to release the cassette in a horizontal collector placed under the printing position. In this case, the release generally takes place by fall and the collector preferably contains up to 30 cassettes.

**.** In a preferred embodiment of the invention, the printer also comprises at least one RFID reader/writer placed on the body of the printer, and a TAG RFID placed on each collector of the printer, wherein the RFID reader/writer is located in front of the TAG and can write all information printed on the cassettes that sequentially arrive to the collector, which information can be transferred to the RFID reader/writer by the camera, the barcode scanner, the LIS, or introduced manually by the operator by means of the user interface. Once the collector is removed from the printer, the operator can easily access all specific information of all cassettes of the collector. When the empty collector is reinserted into its housing in the printer, all information is automatically erased.

**.** Thus, in a preferred embodiment, the invention is directed to a system comprising a printer which not only allows the reduction of errors in the print job of embedding cassettes to zero, but also allows a much easier and faster management of the printed cassettes.

**.** After the cassette has been used by the pathologist, it is sent to a storage facility. The present invention is also directed to a system comprising a printer as above defined, and a storage facility, wherein the storage facility comprises verification means which reads the information printed on the cassette and saves it in a database, wherein the system is capable of comparing the content of the two databases and, if a cassette which was printed is not stored within a predetermined period of time, alert the user of the missing cassettes. Storage systems suitable for use in the system of the present invention are well known in the art. For example, US 2018/0257080discloses a device for storing cassettes, which device comprises means to identify each cassette by reading the identification data on the cassette.

## Claims

1. A system for tracing embedding cassettes, which system comprises:
an embedding cassette laser printer comprising:
a. at least one hub for feeding at least one printing position;
b. conveyor means to transport the cassettes from the hub to the at least one printing position;
c. at least one printing head (110);
d. at least one means (120) to verify the correctness and the readability of the print job, wherein the means (120) to verify the correctness and the readability of the print job is selected from a camera or a barcode scanner, is integrated in the laser and verifies the correctness and the readability of the print job directly through the lens of the laser; and
e. release means (140) to discard the cassette if the print job is not correct or readable, or to convoy it to make it available to an operator; and
a storage facility, wherein the storage facility comprises verification means which reads the information printed on the cassette and saves it in a database, wherein the system is capable of comparing the content of the database with the data of the printer and, if a cassette which was printed is not stored within a predetermined period of time, alerts the user of the missing cassettes.

2. The system according to claim 1, wherein the means (120) to verify the correctness and the readability of the print job is a colour camera.

3. The system according to claims 1- 2, wherein the printer is capable of printing at least two faces of the embedding cassette.

4. The system according to claims 1-3, further comprising at least one cassette collector (150) to collect the cassettes after printing, a RFID reader/writer (160) located on the body of the printer, and a TAG (170) located on the cassette collector.

5. The system according to claims 1-4, comprising a plurality of hubs, and wherein each hub preferably contains cassettes of different colour.

6. A method for tracing embedding cassettes by the system according to claims 1-5, which method comprises the following steps:
a. submit a cassette to a print job on at least one face of the cassette, preferably the slanted face;
b. submit the print job to verification of the readability and correctness thereof by a verification means (120);
c. if the print job is readable and correct, release the cassette;
d. if the print job is not readable or incorrect, discard the cassette and proceed with printing a new cassette with the identical information of the discarded cassette;
e. archive the used cassette in an archive comprising means which reads the information printed on the cassette;
f. compare the data printed by the printer with the data of the archived cassettes and, if a cassette which was printed is not stored within a predetermined period of time, alerts the user of the missing cassette.

7. The method according to claim 6, wherein the release of the cassette in step c. takes place by allowing the cassette to fall into a collector (150) positioned below the printing position.

8. The method according to claim 6, wherein step d. is performed by discarding the cassette through a dedicated chute.

9. The method according to claims 6-8, wherein the printer also comprises a RFID reader/writer (160) and each collector (150) comprises a TAG (170), and wherein all data read by the verification means (120) are transferred to the RFID reader/writer (160), and wherein the RFID (160) writes on the TAG (170) the data of all cassettes collected in the collector (150).

10. The method according to claims 6-9, wherein the printed faces are at least two, and are printed in succession, and after printing each face, the verification means (120) verifies the correctness and readability of the print job before starting to print the following face.

## Patentansprüche

1. System zur Rückverfolgung von Einbettkassetten, wobei das System umfasst:
einen Laser-Einbettkassetten-Drucker umfassend:
a. mindestens eine Zuführeinheit zur Zuführung mindestens einer Druckposition;
b. Fördermittel zum Transportieren der Kassetten von der Zuführeinheit zu der mindestens einen Druckposition;
c. mindestens einen Druckkopf (110);
d. mindestens ein Mittel (120) zur Überprüfung der Korrektheit und der Lesbarkeit des Druckauftrags, wobei das Mittel (120) zur Überprüfung der Korrektheit und der Lesbarkeit des Druckauftrags aus einer Kamera oder einem Barcodescanner ausgewählt ist, in den Laser integriert ist und die Korrektheit und die Lesbarkeit des Druckauftrags direkt durch die Linse des Lasers überprüft; und
e. Freigabemittel (140) zum Verwerfen der Kassette, wenn der Druckauftrag nicht korrekt oder nicht lesbar ist, oder zum Weiterfördern der Kassette, um sie einem Bediener zur Verfügung zu stellen; und
eine Speichereinrichtung, wobei die Speichereinrichtung Überprüfungsmittel umfasst, welche die auf der Kassette gedruckten Informationen lesen und in einer Datenbank speichern, wobei das System in der Lage ist, den Inhalt der Datenbank mit den Daten des Druckers zu vergleichen und, falls eine gedruckte Kassette nicht innerhalb eines vorbestimmten Zeitraums gespeichert wird, den Benutzer über die fehlenden Kassetten zu informieren.

2. Das System nach Anspruch 1, wobei das Mittel (120) zur Überprüfung der Korrektheit und der Lesbarkeit des Druckauftrags eine Farbkamera ist.

3. Das System nach den Ansprüchen 1- 2, wobei der Drucker in der Lage ist, mindestens zwei Flächen der Einbettkassette zu bedrucken.

4. Das System nach den Ansprüchen 1- 3, ferner umfassend mindestens einen Kassettensammler (150) zum Sammeln der Kassetten nach dem Drucken, einen RFID-Leser/Schreiber (160), der am Gehäuse des Druckers angeordnet ist, und ein TAG (170), das am Kassettensammler angeordnet ist.

5. Das System nach den Ansprüchen 1-4, umfassend eine Mehrzahl von Zuführeinheiten, wobei jede Zuführeinheit vorzugsweise Kassetten unterschiedlicher Farbe enthält.

6. Verfahren zur Rückverfolgung von Einbettkassetten durch das Druckersystem nach den Ansprüchen 1-5, wobei das Verfahren die folgenden Schritte umfasst:
a. Zuführen einer Kassette zu einem Druckauftrag auf mindestens einer Fläche der Kassette, vorzugsweise der geneigten Fläche;
b. Unterziehen des Druckauftrags einer Überprüfung seiner Lesbarkeit und Korrektheit durch ein Überprüfungsmittel (120);
c. wenn der Druckauftrag lesbar und korrekt ist, Freigeben der Kassette;
d. wenn der Druckauftrag nicht lesbar oder nicht korrekt ist, Verwerfen der Kassette und Fortfahren mit dem Drucken einer neuen Kassette mit identischen Informationen wie die verworfene Kassette;
e. Archivieren der verwendeten Kassette in einem Archiv, das Mittel umfasst, welche die auf der Kassette gedruckten Informationen lesen;
f. Vergleichen der vom Drucker gedruckten Daten mit den Daten der archivierten Kassetten und, falls eine gedruckte Kassette nicht innerhalb eines vorbestimmten Zeitraums gespeichert wird, Informieren des Benutzers über die fehlende Kassette.

7. Das Verfahren nach Anspruch 6, wobei das Freigeben der Kassette in Schritt c. dadurch erfolgt, dass die Kassette in einen unterhalb der Druckposition angeordneten Sammler (150) fallen gelassen wird.

8. Das Verfahren nach Anspruch 6, wobei Schritt d. durch Verwerfen der Kassette über eine spezielle Rutsche ausgeführt wird.

9. Das Verfahren nach den Ansprüchen 6-8, wobei der Drucker ferner einen RFID-Leser/Schreiber (160) umfasst und jeder Sammler (150) ein TAG (170) umfasst, und wobei alle von dem Überprüfungsmittel (120) gelesenen Daten an den RFID-Leser/Schreiber (160) übertragen werden, und wobei der RFID-Leser/Schreiber (160) die Daten aller in dem Sammler (150) gesammelten Kassetten auf das TAG (170) schreibt.

10. Das Verfahren nach den Ansprüchen 6-9, wobei die bedruckten Flächen mindestens zwei sind, und nacheinander bedruckt werden, und wobei nach dem Bedrucken jeder Fläche das Überprüfungsmittel (120) die Korrektheit und die Lesbarkeit des Druckauftrags überprüft, bevor mit dem Bedrucken der folgenden Fläche begonnen wird.

## Revendications

1. Système de traçage de cassettes d'inclusion, ledit système comprenant :
une imprimante laser pour cassettes d'inclusion comprenant :
a. au moins un moyeu pour alimenter au moins une position d'impression ;
b. des moyens de convoyage pour transporter les cassettes du moyeu vers ladite au moins une position d'impression;
c. au moins une tête d'impression (110);
d. au moins un moyen (120) pour vérifier l'exactitude et la lisibilité du travail d'impression, le moyen (120) pour vérifier l'exactitude et la lisibilité du travail d'impression étant sélectionné parmi une caméra ou un lecteur de codes-barres, étant intégré dans le laser et vérifiant l'exactitude et la lisibilité du travail d'impression directement à travers la lentille du laser ; et
e. des moyens de libération (140) pour rejeter la cassette si le travail d'impression n'est pas correct ou lisible, ou pour la convoyer afin de la rendre disponible à un opérateur ; et
une installation de stockage, ladite installation de stockage comprenant des moyens de vérification qui lisent les informations imprimées sur la cassette et les enregistrent dans une base de données, le système étant capable de comparer le contenu de la base de données avec les données de l'imprimante et, si une cassette imprimée n'est pas stockée dans un laps de temps prédéterminé, alerter l'utilisateur des cassettes manquantes.

2. Le système selon la revendication 1, dans lequel le moyen (120) pour vérifier l'exactitude et la lisibilité du travail d'impression est une caméra couleur.

3. Le système selon les revendications 1- 2, dans lequel l'imprimante est capable d'imprimer au moins deux faces de la cassette d'inclusion.

4. Le système selon les revendications 1- 3, comprenant en outre au moins un collecteur de cassettes (150) pour collecter les cassettes après impression, un lecteur/graveur RFID (160) disposé sur le corps de l'imprimante, et une étiquette TAG (170) disposée sur le collecteur de cassettes.

5. Le système selon les revendications 1-4, comprenant une pluralité de moyeux, et dans lequel chaque moyeu contient de préférence des cassettes de couleur différente.

6. Procédé de traçage de cassettes d'inclusion par le système d'imprimante selon les revendications 1-5, ledit procédé comprenant les étapes suivantes:
a. soumettre une cassette à un travail d'impression sur au moins une face de la cassette, de préférence la face inclinée;
b. soumettre le travail d'impression à une vérification de sa lisibilité et de son exactitude par un moyen de vérification (120);
c. si le travail d'impression est lisible et correct, libérer la cassette;
d. si le travail d'impression n'est pas lisible ou est incorrect, rejeter la cassette et procéder à l'impression d'une nouvelle cassette comportant les informations identiques à celles de la cassette rejetée;
e. archiver la cassette utilisée dans une archive comprenant des moyens qui lisent les informations imprimées sur la cassette;
f. comparer les données imprimées par l'imprimante avec les données des cassettes archivées et, si une cassette imprimée n'est pas stockée dans un laps de temps prédéterminé, alerter l'utilisateur de la cassette manquante.

7. Le procédé selon la revendication 6, dans lequel la libération de la cassette à l'étape c. a lieu en permettant à la cassette de tomber dans un collecteur (150) positionné au-dessous de la position d'impression.

8. Le procédé selon la revendication 6, dans lequel l'étape d. est réalisée en rejetant la cassette par une goulotte dédiée.

9. Le procédé selon les revendications 6-8, dans lequel l'imprimante comprend également un lecteur/graveur RFID (160) et chaque collecteur (150) comprend une étiquette TAG (170), et dans lequel toutes les données lues par le moyen de vérification (120) sont transférées au lecteur/graveur RFID (160), et dans lequel le RFID (160) écrit sur l'étiquette TAG (170) les données de toutes les cassettes collectées dans le collecteur (150).

10. Le procédé selon les revendications 6-9, dans lequel les faces imprimées sont au moins au nombre de deux, et sont imprimées successivement, et après l'impression de chaque face, le moyen de vérification (120) vérifie l'exactitude et la lisibilité du travail d'impression avant de commencer à imprimer la face suivante.
